(19) Europäisches Patentamt

European Patent Office

Office européen des brevets

(11) **EP 0 949 780 B1**

(12) **EUROPEAN PATENT SPECIFICATION**

(45) Date of publication and mention
of the grant of the patent:
**01.03.2006 Bulletin 2006/09**

(51) Int Cl.:
***H04L 1/00*** (2006.01)

(21) Application number: **99302748.1**

(22) Date of filing: **08.04.1999**

(54) **A frame format and method and apparatus for processing a frame**

Rahmenformat und Verfahren und Einrichtung zur Verarbeitung von Rahmen

Format de trame et méthode et dispositif pour le traitement de trame

(84) Designated Contracting States:
**FR GB IT**

(30) Priority: **08.04.1998 JP 9585398**
**15.10.1998 JP 29368898**

(43) Date of publication of application:
**13.10.1999 Bulletin 1999/41**

(73) Proprietor: **NEC CORPORATION**
**Tokyo (JP)**

(72) Inventors:
• **Tanaka, Hiroaki,**
**c/o Nec Corporation**
**Tokyo (JP)**
• **Nomura, Kenichi,**
**c/o Nec Corporation**
**Tokyo (JP)**
• **Fujisawa, Takanori,**
**c/o Nec Corporation**
**Tokyo (JP)**
• **Hara, Yasushi,**
**c/o Nec Corporation**
**Tokyo (JP)**
• **Yanagi, Norio,**
**c/o Nec Corporation**
**Tokyo (JP)**

(74) Representative: **W.P. Thompson & Co.**
**55 Drury Lane**
**London WC2B 5SQ (GB)**

(56) References cited:
**EP-A- 0 684 712          EP-A- 0 777 354**
**US-A- 5 694 405**

• **DATABASE EPODOC [Online] EUROPEAN**
**PATENT OFFICE, THE HAGUE, NL; KR 9302390**
**B, 30 March 1993 (1993-03-30) GOLD STAR CO**
**(KR): "MARK TRANSFORMATION DEVICE FOR**
**DIGITAL SIGNAL" retrieved from EPODOC**
**Database accession no. 1993-375225[47]**
**XP002182530**

**Description**

The present invention relates to a frame format and to a method and apparatus for processing a frame. A particular arrangement to be described by way of example in illustration of the invention is concerned with a frame format used in a Forward Error Correction section for an error correction code that is used in a main transmission apparatus.

In recent years, an increase in the amount of communication is remarkable against the background of the development of information transfer. Accordingly, the development of a high speed and large capacity transmission apparatus is urgently needed in a main transmission system. Also, at the same time as this, the small-sizing of apparatus and the reduction of cost are essential. The codec section for an error correction code used in main transmission apparatus is also no exception to this.

Accordingly, since, in an FEC (Forward Error Correction)IC that has been used conventionally, the processing speed is slow, parallel processing is conducted by means of a number of IC's for achieving high speed processing. This means that the scale of the apparatus becomes large. Accordingly, a high speed and small-sized IC is required. Actually, high speed IC, parallel processing is often conducted so as to meet the speed of an encoding section inside the IC.

EP-A-0 777 354 discloses a digital transmission apparatus employing differential coding and forward error correction and in which a forward error correction frame is divided for parallel processing.

A frame format has been proposed previously for use in a high speed FEC-IC, and the operation of the high speed FEC-IC will be explained, with reference to Figs. 13 to 18 of the accompanying drawings in which:-

Fig. 13 is a diagram for use in explaining a previously proposed frame format,
Fig. 14 is a block schematic diagram for use in explaining one example of a previously proposed high speed FEC-IC,
Fig. 15 is a diagram showing a bit series of one frame which is input in a previous proposal to a high speed FEC-IC,
Fig. 16 is a diagram showing the positions of bits which are processed by each COD of the high speed FEC-IC in a previous proposal,
Fig. 17 is a block schematic diagram showing a circuit arrangement of an FEC frame transformation section for use in conducting an FEC frame processing method in a previous proposal, and
Fig. 18 is an explanatory view of a data array after frame transformation in the FEC frame processing method in relation to a prior proposal.

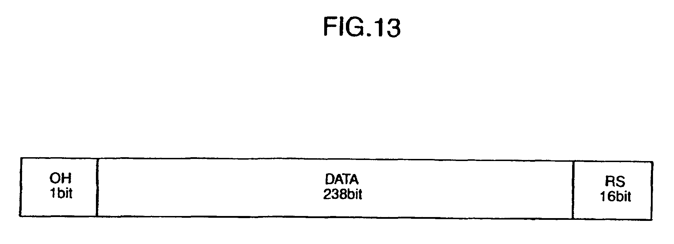

As shown in Fig. 13, one frame is constructed of a total of 255 bits in which the first bit is an overhead (OH), 238 bits are data, and the remaining 16 bits are Reed Solomon codes (referred to as RS, hereinafter).

Now, the high speed FEC-IC for processing the data in the above-mentioned frame format will be explained.

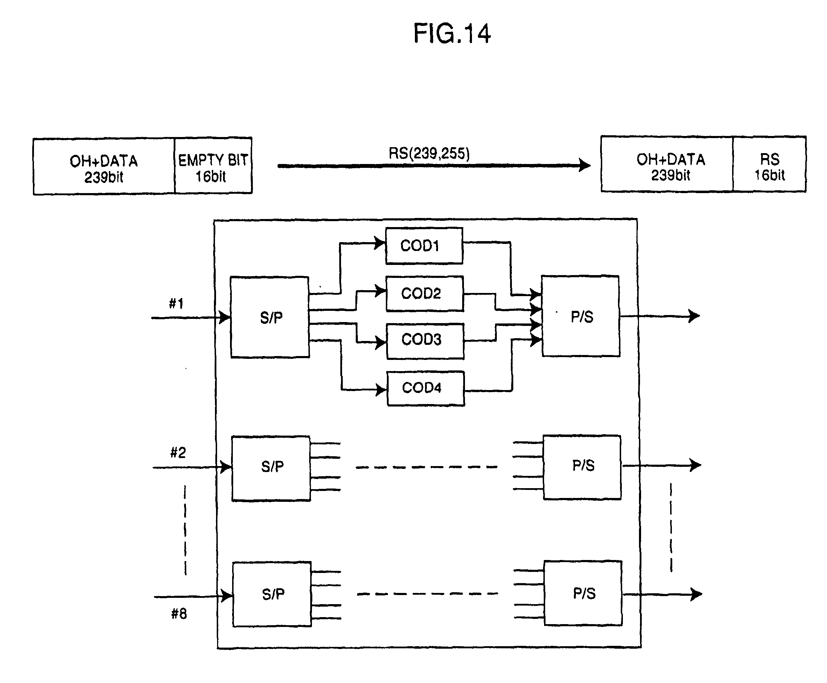

Fig. 14 is a view for explaining one example of the high speed FEC-IC.

This FEC-IC is assumed to operate with 300 MHZ so as to conduct 8 bit parallel processing (input/output #1 to #8). Also, each input of the 8 bit parallels is further divided to 4 bit parallels by means of a serial-parallel (S/P) convertor, and the speed thereof is reduced to a speed at which code processing for a correction code can be conducted. Thereafter, the Reed Solomon codes (RS) are calculated and added by each COD module, and the speed is restored to the original transmission speed by a parallel-serial (P/S) transformation.

Next, operation of the high speed FEC-IC in which a frame of the previously proposed frame format is input will be explained.

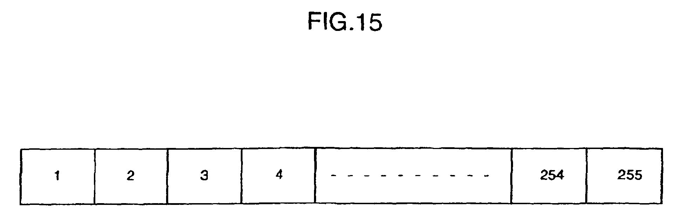

A bit series of one frame that is input to #1 of Fig. 14 is shown in Fig. 15. Each numeral in Fig. 15 shows a bit position within the frame, and it will be considered that this frame is repeatedly input.

First, a serial data of 255 bits, which has been input from #1, is transformed to a 4 bit parallel data by the S/P transformation. Encoding of RS on the data is conducted by COD1 to COD4, respectively, and thereafter, the speed is restored to the original speed by the P/S transformation.

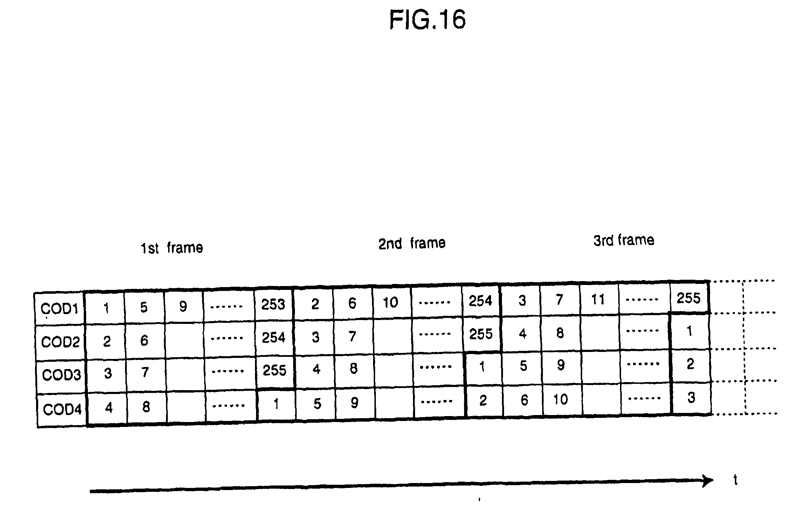

A bit series that is processed by the COD1 to COD4 at this time is shown in Fig. 16. Since the serial data of 255 bits is processed by the 4 bit parallels, the bit positions at which each COD conducts the processing are different for each frame (shifted by one bit).

By the way, in order to resolve the above-mentioned shift of the bit positions at which each COD conducts the processing by means of a hardware, it is necessary to incorporate a buffer in the IC or to add a function capable of accommodating itself to the shift in the COD modules.

However, if such a means is arranged, the arrangement results in a lowering of a processing speed or large-sizing of the IC.

Next, operation of the receiving the FEC frame be explained. In a previously proposed FEC frame processing, an optical signal of 32,640 bits that has been input is divided into 128. Since this optical signal is processed by the even-number of circuits, the circuit size of an FEC frame transformation section becomes large, and the processing is inefficient.

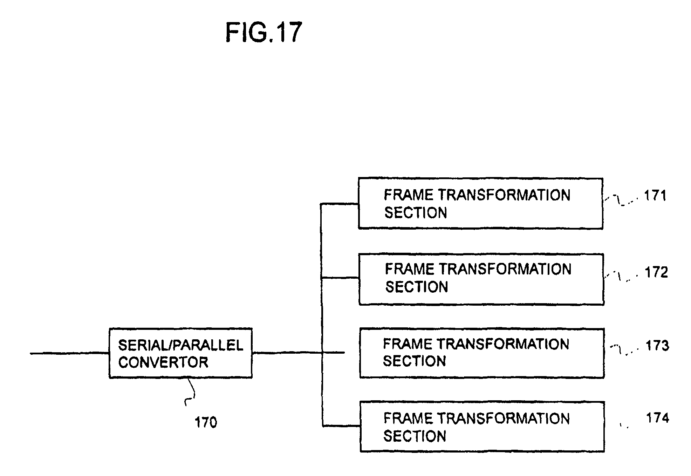

Fig. 17 simply shows an arrangement of the FEC frame transformation section in relation to the prior proposals, and shows here that four parallel processing is applied to the even-number of the 255 bits optical signal transformed in a serial-parallel convertor 170.

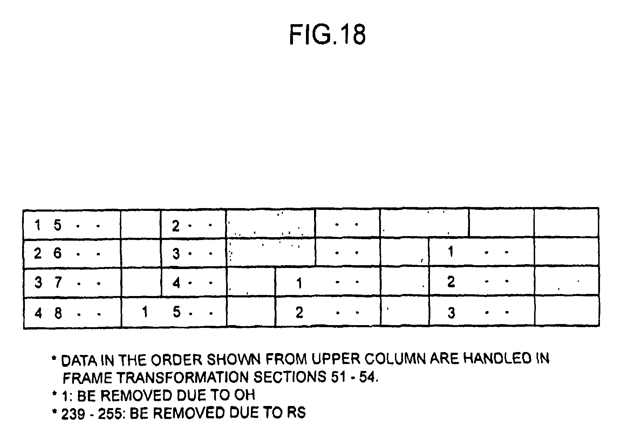

The first bit is removed out of the respective optical signals to which the four parallel processing was applied in this manner, since it is an OH signal, and then, 239 - 255 bits of Reed Solomon signals (syndromes) are removed. This situation is shown in Fig. 18. An upper column to a lower column in the table show contents to be processed in each of frame transformation sections 171-174. It is shown that numbers with half-tone in this table are to be removed, respectively.

Features of a frame format, frame processing and apparatus to be described below, by way of example in illustration of the invention are that the hardware arrangement within the FEC-IC becomes comparatively simple, and high speed processing and small-sizing can be achieved and that a frame format for accomplishing the above-described features can be obtained with high compatibility with the conventional system.

According to an aspect of the present invention, there is provided a frame format used for a codec in which where the number of total bits used for an overhead, a data and an error correction code is B bits, and the frame includes at least one dummy bit with the bit number of the dummy bit(s) being D bits, the number A of total bits of one frame is A = B + D, and where the number of parallel processing inside the codec is P, the bit number D of the dummy bits satisfies

$$D = P \times n - B;$$

wherein n is a natural number.

In addition, for the above-described error correction code, a Reed Solomon code is used as a typical example.

Also, it is possible to use the above-described dummy bits as an arbitrary information bit.

According to another example of the present invention, there is provided a frame processing method of a codec in which the number of parallel processing is P and, the frame includes at least one dummy bit wherein the bit number of the dummy bit(s) is D bits, and a data and an error correction code is B bits such that D = P x n - B, where n is a natural number, the method including the steps of:

receiving a bit series in which the number of data and error correction code bits in the frame is B;
processing a bit series in which the number of total bits of one frame is A bits;
adding a number of dummy bits D to the frame format before the data is input to the FEC coding/decoding section;
adding an error correction code;
processing the resulting frame so that bit positions of the bit series which are processed by each parallel processing section are not different for every frame.

In addition, in the case in which the number of total bits used for an overhead, a data and an error correction code is B bits, and the number of parallel processing of the codec is P the bit number ofD of the above-described dummy bits is D = P x n - B (n is a natural number).

Also, if the above-described dummy bits are processed as an arbitrary information bit, it is possible to incorporate information into the dummy bits.

In the frame format for the codec to be described below as example in illustration of the present invention, the dummy bits are added to a frame arrangement that has been used conventionally, in accordance with the number of parallel processing operations inside the codec.

The above-described features are obtained by one exemplary FEC frame processing method in which an FEC frame included in an optical signal to be input is divided into one hundred twenty eight, and the optical signal divided into one hundred twenty eight is processed by means of a three parallel method in applying serial-parallel converting to the optical signal, and by an FEC frame processing method in which an optical signal to which serial/parallel converting is applied in accordance with a three parallel method is output as an optical signal forming an FEC frame by means of multiplexing of one hundred twenty eight.

There will also be described an exemplary FEC frame processing apparatus which has a serial/parallel convertor for converting an FEC frame of a serial system, which is divided into one hundred twenty eight, into three parallels, and bit removal means for removing a bit at a previously fixed bit position of each signal that was converted.

In a FEC frame processing method to be described as an example in illustration of the present invention, after an FEC frame included in an optical signal to be input and output is divided into 128, the optical signal divided into one hundred twenty eight is processed by means of the three parallel method. According to such three parallel processing, the removal of the OH signal and the Reed Solomon signals can be easily conducted, and the scale of the hardware circuit to be mounted for processing the FEC frame is reduced. In other words, as a result of adopting the three parallel method, since a frame pattern that is processed in each frame transformation becomes to be one pattern, the processing is simplified, and it is possible to reduce the scale of the hardware circuit to be mounted.

The following description and drawings disclose, by means of examples, the invention which is characterised in the appended claims, whose terms determine the extent of the protection conferred hereby.

In the drawings:-

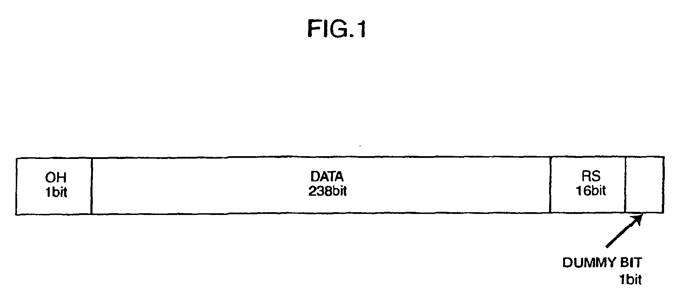

Fig. 1 is a view showing one example of a frame format for a high speed FEC-IC,

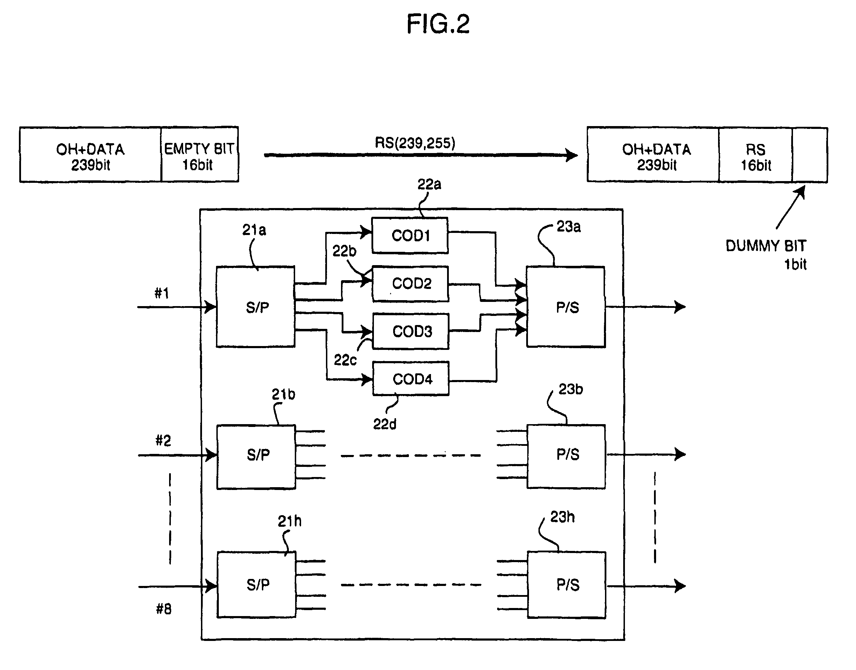

Fig. 2 is a block diagram showing one example of the high speed FEC-IC,

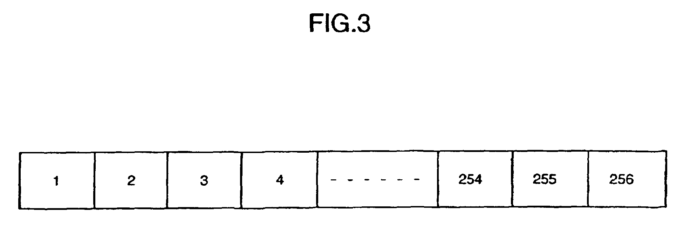

Fig. 3 is a view showing an example of a serial data which is input to the high speed FEC-IC shown in Fig. 2,

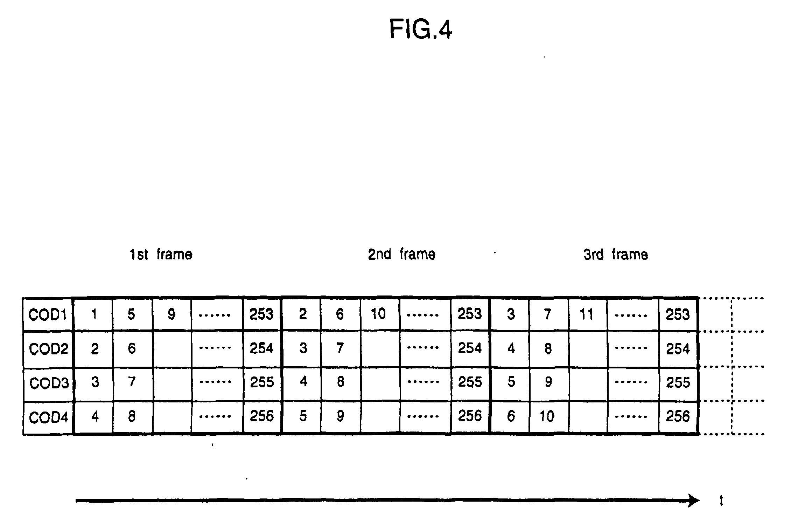

Fig. 4 is a view showing positions of bits which are processed by each COD of the high speed FEC-IC shown in Fig. 2,

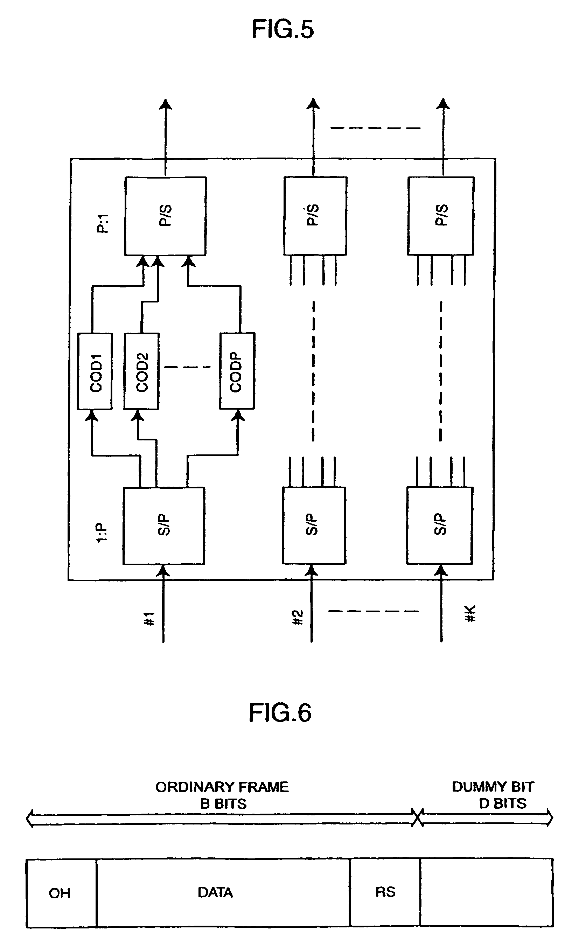

Fig. 5 is a block diagram showing a generalized high speed FEC-IC,

Fig. 6 is a view for explaining a generalized frame format,

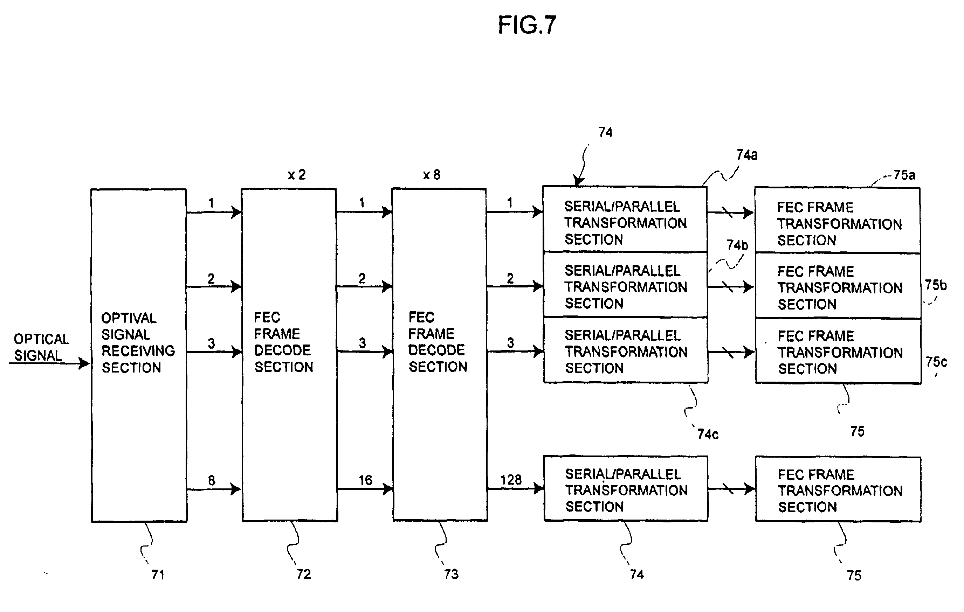

Fig. 7 is a block diagram showing an embodiment of a circuit arrangement appropriate for conducting an FEC frame processing method (reception),

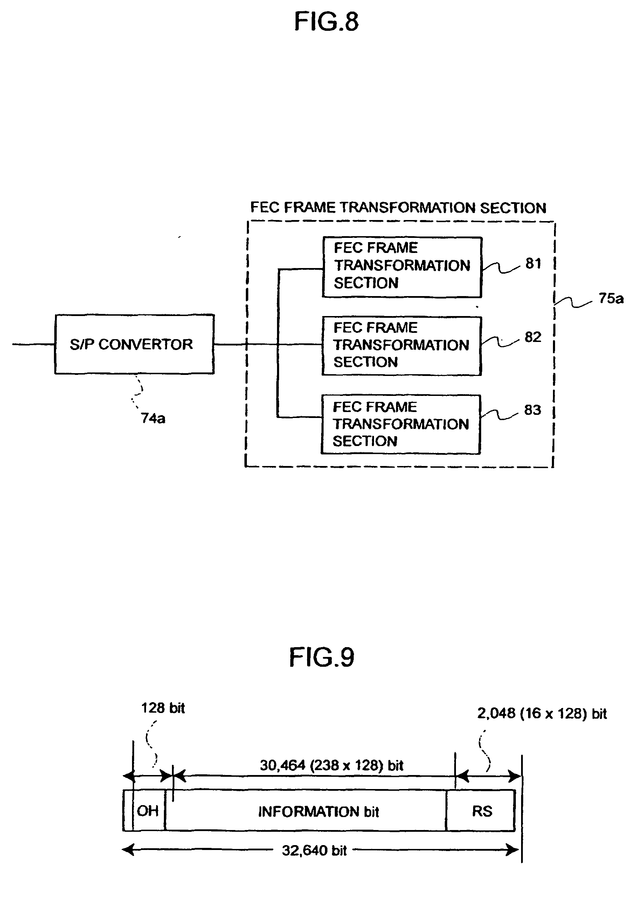

Fig. 8 is a block diagram showing an embodiment of an FEC frame transformation section appropriate for conducting the FEC frame processing method,

Fig. 9 is an explanation view of an FEC frame of an optical signal to be processed,

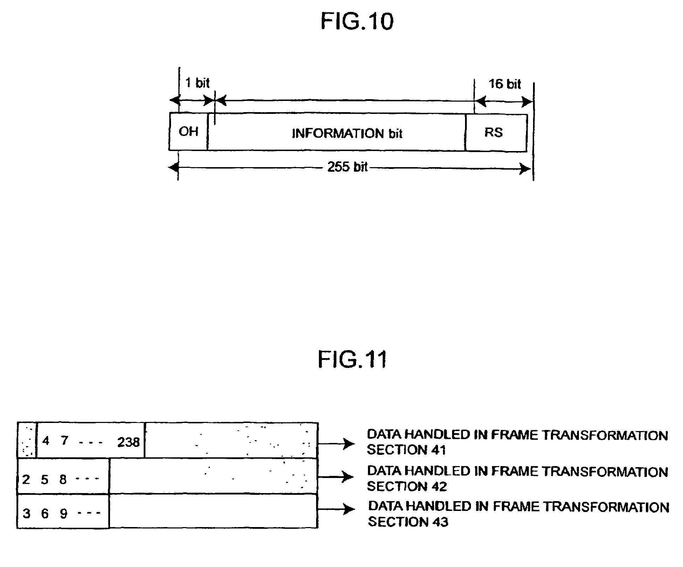

Fig. 10 is an explanation view of a frame format after serial/parallel converting,

Fig. 11 is an explanation view of a data array after a frame transformation, and

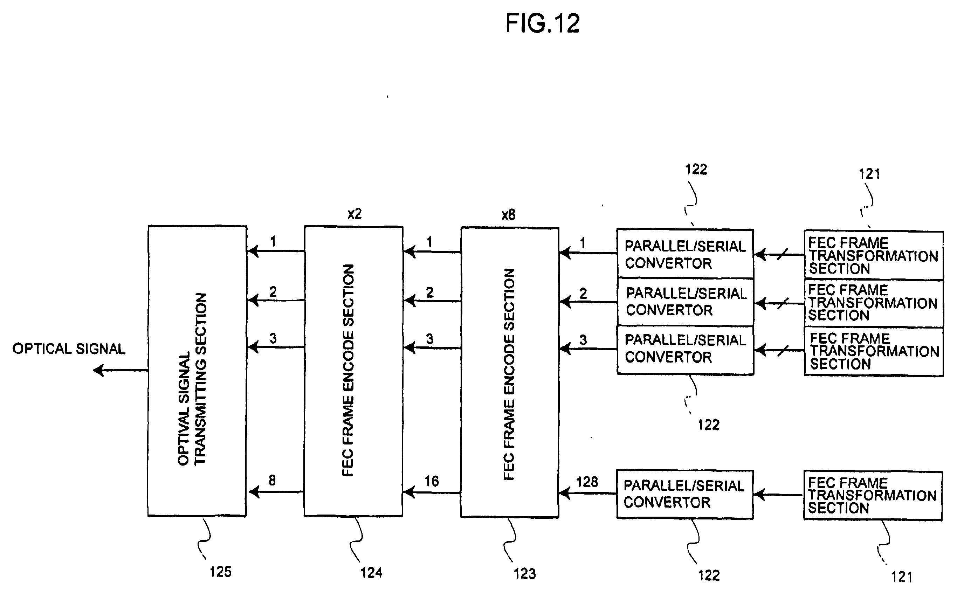

Fig. 12 is a block diagram showing an embodiment of a circuit arrangement appropriate for conducting an FEC frame processing method (transmission).

First, one example of a frame format for a high speed FEC-IC will be explained. Fig. 1 is a view showing one example of a frame format for a high speed FEC-IC.

In the conventional frame format, one frame is constructed of a total of 255 bits in which the first one bit is an overhead (OH), 238 bits are data, and the remaining 16 bits are Reed Solomon codes.

However, in the frame format for the high speed FEC-IC to be described in illustration of the present invention, in addition to the conventional frame format, by taking into account that 4 bit parallel processing is applied to inputs in the IC, 256 bits are realized by adding a dummy bit of 1 bit.

Now, a high speed FEC-IC to which the frame format for the high speed FEC -IC is input will be described. Fig. 2 is a block diagram showing one example of the high-speed FEC-IC.

This high speed FEC-IC operates at 300 MHZ so as to conduct 8 bit parallel processing (input/output #1 to #8).

Also, each input (#1 to #8) of the 8 bit parallels is further divided to 4 bit parallels by means of serial-parallel (S/P) convertors 21a - 21h, and the speed is reduced to a speed at which code processing for a correction code can be conducted.

In each of COD modules 22a - 22d, Reed Solomon codes are calculated and added to the frame format. A dummy bit of 1 bit is added to the frame format before the data is input to the FEC coding/decoding parallel processing section.

Data output from each of the COD modules 22a - 22d are input to parallel-serial (P/S) transformations 23a - 23h, and the speed is restored to the original transmission speed.

Next, the operation of this embodiment will be explained. In order to make the explanation easy to understand, the operation will be explained by focusing on an input #1 in Fig. 2. Actually, the operation explained below is processed from #1 to #8 in parallel.

First, a serial data of 256 bits as shown in Fig. 3 is input to the input #1. Then, this serial data of 256 bits is transformed to a 4 bit parallel data by means of the S/P transformation 21a. Bit series which are processed by each of the COD 22a to the COD 22d at this time are shown in Fig. 4.

Since the dummy bit is being added to by 1 bit, 256 can be divided by 4 and positions of the bits which are processed by each of the COD 22a to 22d do not change for every frame, and a task such as a bit shift which occurs in the above-mentioned conventional frame arrangement can be avoided. In addition, 0 or 1 which does not have a specific meaning can be allocated to the dummy bit, and some information can be allocated, however. In the above-mentioned example, even though 1 + 4 x N bits (N is a natural number) are allocated to the dummy bit, much information can be put on without causing a shift of the bit positions. Management information of a transmission system and so forth can be the information to be put on.

Although, in the above-mentioned example, an example of one bit as the dummy bit was explained, a case in which the frame format is generalized will be explained.

An FEC-IC to which a bit series is input is shown in Fig. 5. In Fig. 5, the FEC-IC is shown, in which the number of processing in the FEC-IC is K, and the number of parallel processing of each processing is P.

Here, assuming that the number of parallel processing steps inside the FEC-IC is P, the number of bits of the conventional frame format is B, and the number of bits of the dummy bit is D, a proposed frame format can be represented as shown in Fig. 6. However, the bit number D of the dummy bit must satisfy the following equation:

$$B + D = P \times N \text{ (N is a natural number)} \qquad (1)$$

For example, if in the above-mentioned example P = 4 and B = 255, and if these values are assigned into the equation (1),

$$255 + D = 4 \times N \qquad (2)$$

Since D is a positive integer N $\geqq$ 64 and if a case of N = 64 is considered,

$$255 + D = 256 \qquad (3)$$

and accordingly, D can be set: D =1 1 bit.

Also, in the case in which it is desired that much information is put on the dummy bit, N is set: N = 65, for example,

$$255 + D = 260 \qquad (4)$$

and accordingly, D can be set: D = 5 bits.

By using the frame format described in a type of the high speed FEC-IC in which the speed is reduced by means of the S/P transformation inside the IC, compared with the case in which the conventional frame arrangement is employed, the number of buffers in the FEC-IC becomes less, the hardware arrangement becomes more simple, and a high speed and small-sizing of the IC can be realized.

Also, since a format equivalent to the previously proposed format can be obtained by removing only a dummy bit by means of a dummy bit removing circuit, a high degree of compatibility with the previously proposed conventional system is possible.

Next, frame processing illustrative of the present invention will be described. Referring to Fig. 7 showing an arrangement of a first embodiment, in an optical signal receiving section 71, an optical signal formed of an FEC frame is received, and the optical signal formed of the FEC frame is divided into eight.

In a first FEC frame decode section 72, each signal that was divided into eight is divided by two and into sixteen signals. In a second FEC frame decode section 73, the optical signals that were previously divided by two are further divided by eight and into one hundred twenty eight signals.

A serial-parallel convertor 74 at the next stage is an assembly of individual serial-parallel convertors 74a-74c arranged correspondingly to the respective signals. The individual serial-parallel convertors 74a-74c apply serial-parallel converting to the signals that were divided into one hundred twenty eight through the above-mentioned process, and provide the signals to three respective FEC frame transformation sections 81 - 83 that are arranged as shown in Fig. 8. An FEC frame transformation section 75 of Fig. 7 is formed by three such FEC frame transformation sections 84-83.

Out of the respective optical signals that were divided into three in the FEC frame transformation section 75. as mentioned below with reference to Fig. 9, an OH signal and Reed Solomon signals of the FEC frame are removed.

Fig. 9 shows the FEC frame of an optical signal that is input to the optical signal receiving section 71, in which the FEC frame is constructed of a format of a total of 32,640 bits, which is formed of an OH signal of 128 bits, information signals of 30,464 (= 238 x 128) bits, and RS signals of 2,048 (= 16 $\times$ 128) bits.

If the optical signal of Fig. 9 is divided into one hundred twenty eight in a manner as mentioned in connection with Fig. 7, when the optical signals are input to the serial-parallel convertor 74, the FEC frame of Fig. 9 comes to have a frame format of a total of 255 bits consisting of an OH signal of 1 bit, information signals of 238 bits and RS signals of 16 bits, as shown in Fig. 10. The signals that were divided into one hundred twenty eight are separated into three signals and processed through the serial-parallel convertor 74.

In the FEC frame transformation sections 81 - 83 of Fig. 8, by removing bits, which are always fixed, such as 1 (= an OH signal) and 239-255 (=RS signals) that correspond to half-tone parts shown in Fig. 11. it is possible to remove the OH signal and the Reed Solomon signals (syndromes) that are included the optical signal.

With regard to the effect of the presently proposed arrangement, conventionally, the signals are divided into four and are processed by means of the serial-parallel convertor 170 shown in Fig. 17. However, in the case in which the signals are divided into four, since as shown in Fig. 18 there are four patterns of the OH signal and the Reed Solomon signals to be removed, the scale of the circuit on which the frame transformation sections 171-174 of Fig. 17 are mounted becomes large. To the contrary, in the present arrangement, by dividing the signals into three as shown in Fig. 8, it becomes possible to reduce the scale of the circuit hardware.

Although Fig. 7 and Fig. 8 are embodiments showing the processing for the signals that are input (received), similarly the same concept can be used for signals that are output (transmitted). Fig. 12 shows this arrangement, and although it is almost the same arrangement as Fig. 7, signals go forward in the opposite direction. In an FEC frame transformation section 121, the three parallel method is applied for processing a data that is formatted as shown in Fig. 11. After that, the data is transformed into serial signals in the serial-parallel convertors 122.

The signals obtained that were divided into one hundred twenty eight are encoded into sixteen signals in a first FEC frame encode section 123. and then, the signals are encoded into eight signals in a second FEC frame encode section 124, and then, an optical signal is output (transmitted) through an optical signal transmitting section 125.

In the processing during such an output also, the arrangement operates in a similar way to the case of the input, and by dividing the signals into three and processing them, the removal of unnecessary signals can be conducted by means of a simple circuit arrangement, and it is possible to reduce the scale of the circuit hardware to be provided.

It will be understood that although particular arrangements have been described, by way of example in illustration of the present invention, variations and modifications thereof, as well as other arrangements, may be conceived within the scope of the appended claims.

**Claims**

1. A frame format used for a codec in which where the number of total bits used for an overhead, a data and an error correction code is B bits, and the frame includes at least one dummy bit with the bit number of the dummy bit(s) being D bits, the number A of total bits of one frame is A = B + D, and
where the number of parallel processing inside the codec is P, the bit number D of the dummy bits satisfies

$$D = P \times n - B;$$

wherein n is a natural number.

2. A frame format used for a codec as claimed in claim 1, wherein the error correction code is a Reed Solomon code.

3. A frame format used for a codec as claimed in claim 1, wherein the dummy bits are used as an arbitrary information bit.

4. A frame processing method of a codec in which the number of parallel processing is P and, the frame includes at least one dummy bit wherein the bit number of the dummy bit(s) is D bits, and a data and an error correction code is B bits such that D = P x n - B, where n is a natural number, the method including the steps of:

    receiving a bit series in which the number of data and error correction code bits in the frame is B;
    processing a bit series in which the number of total bits of one frame is A bits;
    adding a number of dummy bits D to the frame format before the data is input to the FEC coding/decoding section;
    adding an error correction code;
    processing the resulting frame that bit positions of the bit series which are processed by each parallel processing section are not different for every frame.

5. A frame processing method of a codec as claimed in claim 4, wherein in the case in which the number of total bits used for an overhead, a data and an error correction code is B bits, and the number of parallel processing of the codec is P, the bit number D of the dummy bits is

$$D = P \times n - B;$$

wherein n is a natural number.

**6.** A frame processing method of a codec as claimed in claim 4, wherein the dummy bits are processed as an arbitrary information bit.

**7.** A frame processing apparatus including a codec in which the number of parallel processing is P and, the frame includes at least one dummy bit wherein the bit number of the dummy bit(s) is D bits, and a data and an error correction code is B bits such that D = P x n - B, where n is a natural number, the apparatus including:

means for receiving a bit series (21a, ..., 21h) in which the number of data and error correction code bits in the frame is B;
means for processing a bit series (21a, ..., 21h) in which the number of total bits of one frame is A bits;
means for adding a number of dummy bits D to the frame format before the data is input to the FEC coding/ decoding section;
the parallel processing sections (22a, ..., 22d) being arranged to add an error correction code, so that bit positions of the bit series which are processed by each parallel processing section are not different for every frame.

**Revendications**

**1.** Format de trame utilisé pour un codec dans lequel, lorsque le nombre total de bits utilisé pour un surdébit, une donnée et un code de correction d'erreur est de B bits, et que la trame comprend au moins un bit factice ayant un nombre égal à D bits, le nombre total A de bits d'une trame est égal à A = B + D, et dans lequel, lorsque le nombre de traitements en parallèle à l'intérieur du codec est égal à P, le nombre D de bits factices satisfait

$$D = P \times n - B,$$

où n est un entier naturel.

**2.** Format de trame utilisé pour un codec selon la revendication 1, dans lequel le code de correction d'erreur est un code de Reed-Solomon.

**3.** Format de trame utilisé pour un codec selon la revendication 1, dans lequel les bits factices sont utilisés comme un bit d'information arbitraire.

**4.** Procédé de traitement de trame d'un codec dans lequel le nombre de traitements en parallèle est égal à P et la trame comprend au moins un bit factice, dans lequel le nombre de bits factices est égal à D, et une donnée et un code de correction d'erreur possèdent B bits de telle sorte que D = P $\times$ n - B, où n est un entier naturel, le procédé comprenant les étapes consistant à :

recevoir une série de bits dans laquelle le nombre de bits de données et de code de correction d'erreur de la trame est égal à B ;
traiter une série de bits dans laquelle le nombre total de bits d'une trame est égal à A ;
ajouter un nombre de bits factices D au format de trame avant que les données ne soient transmises à la section de codage/décodage de correction d'erreurs sans voie de retour (FEC) ;
ajouter un code de correction d'erreur ;
traiter la trame résultante de telle sorte que les positions de bits des séries de bits qui sont traitées par chaque section de traitement en parallèle ne soient pas différentes pour chaque trame.

**5.** Procédé de traitement de trame d'un codec selon la revendication 4, dans lequel, lorsque le nombre total de bits utilisé pour un temps-système, une donnée et un code de correction d'erreur est égal à B, et que le nombre de traitements en parallèle du codec est égal à P, le nombre de bits factices D est égal à

$$D = P \times n - B,$$

où n est un entier naturel.

6. Procédé de traitement de trame d'un codec selon la revendication 4, dans lequel les bits factices sont traités comme un bit d'information arbitraire.

7. Appareil de traitement de trame comprenant un codec dans lequel le nombre de traitements en parallèle est égal à P, et la trame comprend au moins un bit factice, dans lequel le nombre de bits factices est égal à D, et le nombre de bits de données et de code de correction d'erreur est égal à B de telle sorte que D = P $\times$ n - B, où n est un entier naturel, l'appareil comprenant :

des moyens pour recevoir une série de bits (21a, ... 21h) dans laquelle le nombre de bits de données et de code de correction d'erreur dans la trame est égal à B ;
des moyens pour traiter une série de bits (22a, ... 22d) dans laquelle le nombre total de bits d'une trame est égal à A ;
des moyens permettant d'ajouter un nombre de bits factices D au format de trame avant que les données ne soient transmises à la section de codage/décodage FEC ;
les sections de traitement en parallèle (22a, ... 22d) étant agencées afin d'ajouter un code de correction d'erreur, de telle sorte que les positions de bits des séries de bits qui sont traitées par chaque section de traitement en parallèle ne soient pas différentes pour chaque trame.

**Patentansprüche**

1. Rahmenformat, das für einen Codec verwendbar ist, in dem, wenn die Gesamtanzahl von für ein Overhead, einen Daten- und einen Fehlerkorrekturcode verwendeten Bits B beträgt und der Rahmen mindestens ein Dummy-Bit aufweist, wobei die Bitzahl des (der) Dummy-Bit(s) D Bits beträgt, die Gesamtbitzahl A eines Rahmens A = B + D beträgt, und, wenn die Anzahl paralleler Verarbeitungen im Codec P beträgt, die Bitzahl D der Dummy-Bits die Beziehung D = Fxn-B erfüllt, wobei n eine natürliche Zahl ist.

2. Rahmenformat nach Anspruch 1, wobei der Fehlerkorrekturcode ein Reed Solomon-Code ist.

3. Rahmenformat nach Anspruch 1, wobei die Dummy-Bits als beliebiges Informationsbit verwendet werden.

4. Rahmenverarbeitungsverfahren für einen Codec, in dem die Anzahl paralleler Verarbeitungen P beträgt und der Rahmen mindestens ein Dummy-Bit aufweist, wobei die Bitzahl des (der) Dummy-Bit(s) D und die Bitzahl eines Daten- und ein Fehlerkorrekturcodes B Bits beträgt, so dass D = P$\times$n-B ist, wobei n eine natürliche Zahl ist; wobei das Verfahren die Schritte aufweist:

Empfangen einer Bitfolge, in der die Anzahl von Daten- und Fehlerkorrekturcodebits im Rahmen B beträgt;
Verarbeiten einer Bitfolge, in der die Gesamtanzahl von Bits eines Rahmens A Bits beträgt;
Hinzufügen einer Anzahl D von Dummy-Bits zum Rahmenformat, bevor die Daten einem FEC-Codier-/Decodierabschnitt zugeführt werden;
Hinzufügen eines Fehlerkorrekturcodes; und
Verarbeiten des erhaltenen Rahmens, so dass Bitpositionen der Bitfolgen, die durch jeden von Parallelverarbeitungsabschnitten verarbeitet werden, für alle Rahmen nicht verschieden sind.

5. Verfahren nach Anspruch 4, wobei, wenn die Gesamtzahl der für ein Overhead, einen Daten- und einen Fehlerkorrekturcode verwendeten Bits B beträgt und die Anzahl paralleler Verarbeitungen des Codec P beträgt, die Bitzahl D der Dummy-Hits D = P$\times$n-B beträgt, wobei n eine natürliche Zahl ist.

6. Verfahren nach Anspruch 4, wobei die Dummy-Bits als ein beliebiges Informationsbit verarbeitet werden.

7. Rahmenverarbeitungsvorrichtung mit einem Codec, in dem die Anzahl paralleler Verarbeitungen P beträgt und der Rahmen mindestens ein Dummy-Bit aufweist, wobei die Bitzahl der (des) Dummy-Bits D Bits beträgt und die Bitzahl für einen Daten- und ein Fehlerkorrekturcode B Bits beträgt, wobei D = P$\times$n-B ist, wobei n eine natürliche Zahl ist; wobei die Vorrichtung aufweist:

eine Einrichtung zum Empfangen einer Bitfolge (21a, ..., 21h), in der die Anzahl von Daten- und Fehlerkorrekturcodebits im Rahmen B beträgt;

eine Einrichtung zum Verarbeiten einer Bitfolge (21a, ..., 21h), in der die Gesamtanzahl von Bits eines Rahmens A Bits beträgt;

eine Einrichtung zum Hinzufügen einer Anzahl D von Dummy-Bits zum Rahmenformat, bevor die Daten einem FEC-Codier-/Decodierabschnitt zugeführt werden; und

Parallelverarbeitungsabschnitte (22a, ..., 22d), die dazu geeignet sind, einen Fehlerkorrekturcode hinzuzufügen, so dass Bitpositionen der durch jeden der Parallelverarbeitungsabschnitte verarbeiteten Bitfolgen für alle Rahmen nicht verschieden sind.

FIG.1

| OH<br>1bit | DATA<br>238bit | RS<br>16bit | |

DUMMY BIT
1bit

# FIG.2

| OH+DATA 239bit | EMPTY BIT 16bit |
|---|---|

RS(239,255) →

| OH+DATA 239bit | RS 16bit | |
|---|---|---|

DUMMY BIT 1bit

EP 0 949 780 B1

FIG.3

| 1 | 2 | 3 | 4 | - - - - - - | 254 | 255 | 256 |
|---|---|---|---|------------|-----|-----|-----|

# FIG.4

EP 0 949 780 B1

|  | 1st frame | | | | | 2nd frame | | | | | 3rd frame | | | | |
|------|---|---|---|---|-----|---|----|----|---|-----|---|----|----|---|-----|
| COD1 | 1 | 5 | 9 | ······ | 253 | 2 | 6 | 10 | ······ | 253 | 3 | 7 | 11 | ······ | 253 |
| COD2 | 2 | 6 | | ······ | 254 | 3 | 7 | | ······ | 254 | 4 | 8 | | ······ | 254 |
| COD3 | 3 | 7 | | ······ | 255 | 4 | 8 | | ······ | 255 | 5 | 9 | | ······ | 255 |
| COD4 | 4 | 8 | | ······ | 256 | 5 | 9 | | ······ | 256 | 6 | 10 | | ······ | 256 |

$t$

# FIG.5

# FIG.6

| ORDINARY FRAME | | DUMMY BIT |
| B BITS | | D BITS |

| OH | DATA | RS | |
|----|------|-----|--|

# FIG.7

# FIG.8

FEC FRAME TRANSFORMATION SECTION

S/P CONVERTOR

74a

FEC FRAME
TRANSFORMATION
SECTION  81

FEC FRAME
TRANSFORMATION
SECTION  82

FEC FRAME
TRANSFORMATION
SECTION  83

75a

# FIG.9

128 bit

2,048 (16 x 128) bit

30,464 (238 x 128) bit

| OH | INFORMATION bit | RS |

32,640 bit

# FIG.10

| | | |
|---|---|---|
| 1 bit | | 16 bit |
| OH | INFORMATION bit | RS |
| | 255 bit | |

# FIG.11

| | | |
|---|---|---|
| 4 7 - - - 238 | | → DATA HANDLED IN FRAME TRANSFORMATION SECTION 41 |
| 2 5 8 - - - | | → DATA HANDLED IN FRAME TRANSFORMATION SECTION 42 |
| 3 6 9 - - - | | → DATA HANDLED IN FRAME TRANSFORMATION SECTION 43 |

FIG.12

# FIG.13

| OH<br>1bit | DATA<br>238bit | RS<br>16bit |
|---|---|---|

# FIG.14

OH+DATA 239bit | EMPTY BIT 16bit

RS(239,255) →

OH+DATA 239bit | RS 16bit

EP 0 949 780 B1

FIG.15

| 1 | 2 | 3 | 4 | - - - - - - - - - - - | 254 | 255 |

# FIG.16

|  | 1st frame | | | | | 2nd frame | | | | | 3rd frame | | | | |
|------|---|---|---|------|-----|---|---|----|------|-----|---|----|----|------|-----|
| COD1 | 1 | 5 | 9 | ······ | 253 | 2 | 6 | 10 | ······ | 254 | 3 | 7 | 11 | ······ | 255 |
| COD2 | 2 | 6 |   | ······ | 254 | 3 | 7 |    | ······ | 255 | 4 | 8 |    | ······ | 1 |
| COD3 | 3 | 7 |   | ······ | 255 | 4 | 8 |    | ······ | 1 | 5 | 9 |    | ······ | 2 |
| COD4 | 4 | 8 |   | ······ | 1 | 5 | 9 |    | ······ | 2 | 6 | 10 |   | ······ | 3 |

t

EP 0 949 780 B1

# FIG.17

EP 0 949 780 B1

```
                              ┌─────────────────────────┐
                              │ FRAME TRANSFORMATION     │····171
                              │ SECTION                  │
                              └─────────────────────────┘
                              ┌─────────────────────────┐
                              │ FRAME TRANSFORMATION     │····172
                              │ SECTION                  │
                              └─────────────────────────┘
┌──────────────────┐          ┌─────────────────────────┐
│ SERIAL/PARALLEL  │          │ FRAME TRANSFORMATION     │····173
│ CONVERTOR        │          │ SECTION                  │
└──────────────────┘          └─────────────────────────┘
        170                   ┌─────────────────────────┐
                              │ FRAME TRANSFORMATION     │   174
                              │ SECTION                  │
                              └─────────────────────────┘
```

FIG.18

| 1 5 · · | | 2 · · | | · · | | | |
| 2 6 · · | | 3 · · | | · · | | 1 · · | |
| 3 7 · · | | 4 · · | | 1 · · | | 2 · · | |
| 4 8 · · | 1 5 · · | | 2 · · | | 3 · · | | |

\* DATA IN THE ORDER SHOWN FROM UPPER COLUMN ARE HANDLED IN
  FRAME TRANSFORMATION SECTIONS 51 - 54.
\* 1: BE REMOVED DUE TO OH
\* 239 - 255: BE REMOVED DUE TO RS

EP 0 949 780 B1